Europäisches Patentamt

European Patent Office

Office européen des brevets

(11) Veröffentlichungsnummer: **0 441 103 A1**

## (12) EUROPÄISCHE PATENTANMELDUNG

(21) Anmeldenummer: 90830130.2

(22) Anmeldetag: 29.03.90

(51) Int. Cl.5: **C02F 3/04**

(30) Priorität: 09.02.90 IT 4761190

(43) Veröffentlichungstag der Anmeldung:
14.08.91 Patentblatt 91/33

(84) Benannte Vertragsstaaten:
ES FR GR

(71) Anmelder: **S.I.B.E. S.R.L., SOCIETA INGEGNERIA BERNARDINI ERNESTO**
**Via delle Tre Madonne, 18**
**I-00197 Roma(IT)**

(72) Erfinder: **Bernardini, Ernesto,**
**Via delle Tre Madonne, 18**
**I-00197 Roma(IT)**

(74) Vertreter: **Sneider, Massimo**
**Studio Lenzi Via Lucania 13**
**I-00187 Roma(IT)**

(54) Verfahren zum Abbauen der Verschmutzung in den Verarbeitungsanlagen der von Oliven herrührenden Wässern und diesbezügliche Anlage.

(57) Beim Verfahren zum Abbauen der Verschmutzung in den von den Verarbeitungsanlagen der Oliven herrührenden Wässern werden die Wässer erster und zweiter Destillation mittels einer gewaltigen aerobischen Oxydation biologisch behandelt, infolge welcher die in den destillierten Wässern in Behandlung eventuell vorhandenen organischen Teilchen unter Bildung von grösseren Teilchen oder Schlämmen sich untereinander assozieren, welche unter Trübung des Wassers in demselben in Suspension verbleiben, aber das gesamte ihnen anhaftende verschmutzende Vermögen abbauen. Anschliessend sind die biologisch behandelten Wässer abgekühlt und vermittels Filtration durch Kieselsand und/oder Aktivkohle gereinigt.

Die Anlage zur Verwirklichung des vorstehenden Verfahrens besteht im wesentlichen aus einer unter dem Abkühler-Oxydierer der Anlage gestellten Wanne (2), in die die vom Reiniger kommenden Wässer 1. und 2. Destillation eingelassen werden (1), aus einer Rückführungspumpe (4), welche die Wässer der vorgenannten Wanne (2) entnimmt e sie mehrmals in der Zeiteinheit in die im Abkühlungs-Oxydationsturm (3) vorgesehene Oxydationswabenstruktur (6) zurückführt, zusammen mit einem von einem am Gipfel des Turmes gestellten Generator erzeugten ansteigenden Luftstrom, und aus einer Pumpe (18) welche die in der Wanne enthaltenen und abgefüll-ten Wässer entnimmt und sie zu einem Filter (9) sendet, aus dem sie dann abgelasse werden.

## VERFAHREN ZUM ABBAUEN DER VERSCHMUTZUNG IN DEN VON DEN VERARBEITUNGSANLAGEN DER OLIVEN HERRÜHRENDEN WÄSSERN UND DIESBEZÜGLICHE ANLAGE

Es ist bekannt, dass die Oliven, wenn sie in einer Ölmühle sei es kontinuierlichen sei es diskontinuierlichen Arbeitskreislaufes verarbeitet werden, drei Produkte erzeugen, u.zw.: Olivenöl, Vegetationswässer, feuchte Öltrester.

Bekannt sind auch Verfahren für die Behandlung der Vegetationswässer, indem diese in Wässer erster und zweiter Destillation und in Wässer darauffolgender Destillation mit Hilfe von zweckdienlichen Konzentratoren unterteilt werden.

Nach einer bereits bekannten Anlage desselben Anmelders werden die Destillationswässer desodoriert und gereinigt, indem sie durch zweckdienliche Aktivkohlefilter geleitet werden, weshalb sie anschliessend zur Rückführung in die Olivenpaste bestimmt werden können, deren verschmutzendes Vermögen zwölfmal höher ist als jenes der Destillationswässer.

Es verbleibt jedoch die Tatsache, dass die behandelten Destillationswässer noch ein verschmutzendes Vermögen haben, weshalb es nicht möglicht ist, wenn es so erwünscht wäre, dieselben unmittelbar in die Stadtkanalisation abzulassen.

Der Gegenstand der vorliegenden Erfindung ist somit ein Verfahren zum Abbauen der Verschmutzung in den von den Verarbeitungsanlagen der Oliven herrührenden Wässern.

Ein weiterer Gegenstand der vorliegenden Erfindung ist eine Anlage zur Verwirklichung dieses Verahrens.

Hach dem erfindungsgemässen Verfahren werden die Wässer erster und zweiter Destillation mittels einer gewaltigen aerobischen Oxydation biologisch behandelt, infolge welcher die in den destillierten Wässern in Behandlung eventuell vorhandenen organischen Teilchen unter Bildung von grösseren Teilchen (auch Schlämme genannt) dazu neigen, sich zu verbinden bzw. zu assoziieren, welche unter Trübung des Wassers in demselben in Suspension verbleiben, aber das gesamte ihren anhaftende verschmutzende Vermögen abbauen.

Immer nach dem erfindungsgemässen Verfahren sind die vorgenannten Wässer abgekühlt und vermittels Filtration durch Kieselsand und/oder Aktivkohle biologisch gereinigt und können in die Ölpresse, d.h. ölmühle, selbst zurückgeführt oder problemlos in die Stadtkanalisation abgelassen werden, da sie nunmehr eine weitaus geringere Verschmutzungsrate als jene der Wässer der Zivilwohnhäuser aufweisen.

Die Anlage zur Verwirklichung des vorgenannten Verfahrens macht Gebrauch im wesentlichen von bereits vorhandenen Ausrüstungen in den von demselben Anmelder ausgearbeiteten Anlagen. Erfindungsgemäss und unter Bezugnahme auf die anliegende bezeichnende schematische Zeichnung werden die Wässer 1. und 2. Destillation durch die Leitung 1 den vom Reiniger kommenden Abkühlungswässern hinzugefügt und werden in die unter dem Abkühler-Oxydierer 3 gestellte Wanne 2 eingelassen. Die Rückführungspumpe 4 entnimmt die Wässer der vorgenannten Wanne 2 und lässt sie mehmals in der Zeiteinheit (in der Praxis ungefähr 20-mal pro Stunde) in der Oxydationswabenstruktur 6 mit ansteigendem Luftstrom umlaufen. Dieser Luftstrom ist vorzugsweise von einem am Gipfel des Abkühlungs-Oxydationsturmes 3 gestellten Sauglüfter 7 erzeugt.

Um die in der Wanne 2 enthaltenen und abgefüllten Wässer zu klären werden letztere von einer Pumpe 8 entnommen und dem Filter 9 zugeführt, von dem sie dann in die Kanalisation abgelassen und/oder der Olmühle zurückgeführt werden. Es ist hier zu bemerken, dass der Filter 9 mit einem System von nichtgezeigten Leitungen und Ventilen ausgerüstet ist, welche es ermöglichen die filtrierende Masse zu regenerieren, indem eine Spülung im Gegenstrom getätigt wird, wie dies übrigens bei der Technik dieser Filter bekannt ist.

Das Verfahren zum Abbauen der Verschmutzung in den von den Verarbeitungsanlagen der Oliven herrührenden Wässern und die Anlage zur Verwirklichung desselben wurden hier nur beispielsweise und in nicht einschränkender Form beschrieben und erläutert. Es ist naheliegend, dass angesichts der erfindungsgemässen Lehre Abänderungen und Variationen der vorliegenden Erfindung möglich sind. Es ist somit verständlich, dass die Erfindung im Rahmen der anliegenden Patentansprüche auch anders als im einzelnen beschrieben verwirklicht werden kann.

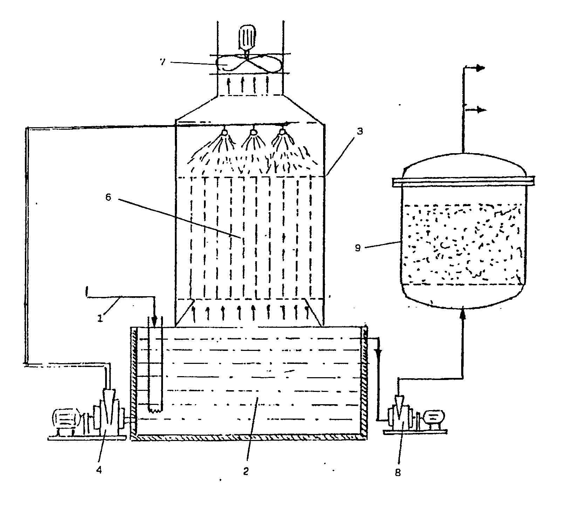

## Patentansprüche

1. Verfahren zum Abbauen der Verschmutzung in den von den Verarbeitungsanlagen der Oliven herrührenden wässern, dadurch gekennzeichnet, dass dis Wässer erster und zweiter Destillation mittels einer gewaltigen aerobischen Oxydation biologisch behandelt werden, infolge welcher die in den destillierten Wässern in Behandlung eventuell vorhandenen organischen Teilchen unter Bildung von grösseren Teilchen oder Schlämmen sich assoziieren, welche unter Trübung des Wassers in demselben in Suspension verbleiben, aber das gesamte ihnen anhaftende verschmutzende Vermögen abbauen.

2. Verfahren, nach Anspruch 1, dadurch gekennzeichnet, dass die mit der genannten gewaltigen aerobischen Oxydation behandelten Wässer abgekühlt und vermittels Filtration durch Kieselsand und/oder Aktivkohle biologisch gereinigt sind und anschliessend in die Ölmühle zurückgeführt oder in die Stadtkanalisation abgelassen werden.

3. Anlage zur Verwirklichung des Verfahrens gemäss Anspruch 1 und/oder 2, dadurch gekennzeichnet, dass sie im wesentlichen besteht aus einer unter dem Abkühler-Oxydierer (3) gestellten Wanne (2), welche die vom Reiniger über die Leitung (1) kommenden Wässer erster und zweiter Destillation aufnimmt, aus einer Rückführungspumpe (4), welche die Wässer der vorgenannten Wanne (2) entnimmt, und aus einem Abkühlungs-Oxydationsturm (3) mit Oxydationswabenstruktur (6), wobei die genannten Wässer mehrmals in der Zeiteinheit (mindestens 20-mal in einer Stunde) zurückgeführt werden zusammen mit einem von einem am Gipfel des genannten Turmes (3) gestellten Sauglüfter (7) erzeugten ansteigenden Luftstrom.

4. Anlage zur Verwirklichung des Verfahrens gemäss Anspruch 1 und/oder 2, nach Anspruch 3, dadurch gekennzeichnet, dass eine Pumpe (8) die in der Wanne (2) enthaltenen und, abgefüllten Wässer entnimmt und dieselben einem Filter (9) zuleitet, von dem sie dann in die Kanalisation abgelassen werden und/oder zur Ölmühle zurückkehren.

5. Verfahren zum Abbauen der Verschmutzung in den von den Verarbeitungsanlagen der Oliven herrührenden Wässern und diesbezügliche Anlage, nach einem oder mehreren der vorstehenden Ansprüche, im wesentlichen wie beschrieben und erläutert.

## EUROPÄISCHER RECHERCHENBERICHT

Nummer der Anmeldung

**EP 90 83 0130**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | JOURNAL OF THE AMERICAN OIL CHEMISTS' SOCIETY. vol. 52, no. 1, Januar 1975, CHAMPAIGN US Seiten 17A - 19A; W.M.Neuner et al.: "Operating experience with biological cooling towers" * Seite 17A * Abstract * * Seite 17A * "Introduction" * * Seite 18A * "Edgewater, N.J. Plant" * — — — | 1,3,4 | C 02 F 3/04 |
| A | Joint committee WPCF and ASCE: "Wastewater Treatment Plant Design" & ASCE, Washington, D.C. USA * Seite 288 * "Recirculation" * * Seite 290 * "Recirculation Ratio" * — — — | 3 | |
| A | FR-A-2 600 636   (DECADES) * Seite 2, Zeilen 5 - 34 * * Seite 4; Anspruch 1; Figur 1 * — — — | 1,3,5 | |
| A | CHEMICAL ABSTRACTS, vol. 106, no. 24, 15 Juni 1987 Columbus, Ohio, USA Bellido Sempere, Eugenio: "Method and apparatus for treating wastewaters from olive processes and/or from olive oil production" Seite 319; rechte Spalte; ref. no. 201268Z * Zusammenfassung & ES 533 670 * — — — — — | 1,2,5 | RECHERCHIERTE SACHGEBIETE (Int. Cl.5) C 02 F |

Der vorliegende Recherchenbericht wurde für alle Patentansprüche erstellt

| Recherchenort | Abschlußdatum der Recherche | Prüfer |
|---|---|---|
| Den Haag | 15 Mai 91 | TEPLY J. |